# EUROPEAN PATENT SPECIFICATION

(11) **EP 1 471 665 B1**
(45) Date of publication and mention of the grant of the patent: **02.05.2012**
(21) Application number: 02787330.6
(22) Date of filing: 25.12.2002
(51) Int. Cl.: H04W 36/14

(54) **SEAMLESS SWITCHING IN A COMBINED LONG AND SHORT DISTANCE WIRELESS COMMUNICATION SYSTEM**
NAHTLOSES UMSCHALTEN IN EINEM KOMBINIERTEN DRAHTLOSEN KOMMUNIKATIONSSYSTEM FÜR GROSSE UND KLEINE DISTANZEN
COMMUTATION SANS INTERRUPTION DANS UN SYSTEME DE COMMUNICATION SANS FIL A COURTE ET LONGUE DISTANCE

(30) Priority: 29.12.2001 CN 01130242
(43) Date of publication of application: 27.10.2004
(73) Proprietor: Lenovo (Beijing) Limited, Haidan District, Beijing 100085 (CN)
(72) Inventor: SUN, Guobin, Haidian District Beijing 100085 (CN); HOU, Zifeng, Haidian District Beijing 100085 (CN)
(74) Representative: Gover, Richard Paul
(86) International application number: PCT/CN2002/000914
(87) International publication number: WO 2003/056719

(56) References cited:
- EP-A- 0 851 633
- EP-A- 1 094 647
- WO-A-98/29975
- WO-A1-94/00946
- JP-A- 58 151 136
- US-A- 5 127 042
- US-A- 5 210 785
- US-A- 6 023 461
- US-A1- 2001 036 830
- "Broadband Radio Access Networks (BRAN); HIPERLAN Type 2; Requirements and Architectures for Interworking between HIPERLAN/2 and 3rd Generation Cellular systems; ETSI TR 101 957" ETSI STANDARDS, LIS, SOPHIA ANTIPOLIS CEDEX, FRANCE, vol. BR, no. V1.1.1, 1 June 2001 (2001-06-01), pages 1-56, XP014022502 ISSN: 0000-0001

## Description

This invention relates to a wireless communication system and its method, more specially, to a wireless communication system which combines long and short distance wireless communication techniques and achieves seamless switch of links. This invention belongs to the field of communication techniques.

In current mechanisms of communication systems, GSM/GPRS and the future 3G (third generation) are all long distance communication (LDC). The major characteristics for long distance communication include the coverage of large area, installation with low cost, and operation with high cost and low transmission rate, etc. The long distance communication can be referred as to a concept of "ocean". Recent 802.11 and BT, for example, belong to the short distance communication (SDC). The major characteristics of short distance communication include the use in office areas and certain business areas, the coverage of limited areas, installation with high cost, operation with low cost and high transmission rates, etc. The short distance communication can also be referred as to a concept of "island". The networks of the short distance communication are separated from each other, and have been significantly limited to a certain area respectively.

In GSM900/1800 networks, and the interacting networks of GSM/GPRS and the third generation mobile communication, all of them embody the concept of long distance, i.e. the concept of "ocean". The operation modes employed are multiple access modes such as TDMA, CDMA. However, in long and short distance communication networks, short distance communication generally employs operation modes such as CSMA/CA which are suitably used for short distance transmission. Meanwhile, in long distance communication networks (LDCN), although the transmission powers thereof are always very large, the transmission powers are limited due to the limitation of Local Area Networks (LAN) such as WLAN networks, so that the characteristics of "island" is present. Furthermore, with respect to long distance communication networks, short distance communication networks (SDCN) have the advantages of wide bands, fast transmission rates, low cost etc.

There exists a need to combine long distance communication networks and short distance communication networks to complement the advantages for each other. Thus, a terminal can receive the services from long and short distance communication networks according to different requests. For example, the terminal may obtain a voice service with long distance communication networks whereas obtain a data service with short distance communication networks. That is, in long and short distance communication networks, the characteristics of that short distance communication is present in long distance communication network coverage.

ETSI technical report 101 957, V1.1.1 (2001-06) relating to Broadband Radio Access Networks discloses to a public wireless access solution to cover the demand for data intensive applications and enabling smooth online access to corporate data services in hot spots which would allow a user to roam from a private, microcell network (for example a Hyperlan/2 network) to a 3G cellular network.

US-6023461 discloses a handoff control process in a wireless ATM network which replaces an old communications connection with a new communication connection. In order to guarantee that no data is lost during the replacement process, an ATM cellular level mechanism is used to reschedule the buffering and transmitting of data streams of the virtual channels to be handed-off

An object of the present invention is therefore to provide a wireless communication system and method which can combine long and short distance communication techniques.

Another object of the present invention is to provide a wireless communication dual distance terminal which can combine long and short distance communication techniques.

Yet another object of the present invention is to provide a wireless communication dual distance network server which can combine long and short distance communication techniques.

Embodiments of the present invention may achieve seamless switch such as automatic switching, capacity evaluation and security issues and the likes when a user enters an area covered by both long and short distance wireless communication while guarantee the long distance wireless communication so that the user may use short distance wireless communication and access whole networks through the short distance wireless access point (AP). Thus, the two types of network resources can be more effectively used.

According to a first aspect of the present invention there is provided a combined long and short distance wireless communication system comprising: a dual distance terminal for providing subscribers with long and short distance communication services; at least one remote distance base station for providing remote distance wireless access for said dual distance terminal; at least one short distance access point AP for providing short distance wireless access for said dual distance terminal; and a dual distance network server for connecting said at least one remote distance base station and said at least one short distance AP to execute network switching for said dual distance terminal and enabling said dual distance terminal to access the network to which it is switched; characterised in that the dual distance network server is arranged to store data that may be missed during switching and to send the stored data to said dual distance terminal after said terminal switching is completed; further characterised in that the dual distance terminal is arranged such that when the dual distance terminal requests seamless switching from a short distance communication network to a long distance communication network based on its service level, the dual distance terminal transmits a beacon signal to the short distance AP, the beacon signal then being transmitted to the dual distance network server by the short distance AP; further characterised in that the dual distance terminal is arranged such that when the dual distance terminal requests seamless switching from a long distance communication network to a short distance communication network based on its service level, the dual distance terminal transmits a beacon signal to the remote distance base station, the beacon signal then being transmitted to the dual distance network server by the remote distance base station; and further characterised in that the dual distance network server is arranged to determine a service queue position or priority in which the dual distance terminal is to be arranged in the destination network based on its service level, wherein the dual distance terminal is arranged such that when the dual distance terminal detects that a wireless local area network WLAN exists in the short distance network, the dual distance terminal then accesses the WLAN network, and the dual distance terminal continues the detection and enters into the long distance network in the case where the entrance into the WLAN network is unsuccessful, wherein the dual distance terminal is arranged such that when the dual distance terminal moves from one short distance cell to another short distance cell, the dual distance terminal identifies the short distance access point to which it enters, and sends the cell information to the dual distance network server to perform the switching between the short distance cells, and the dual distance terminal informs a home server among the dual distance network servers that it has already entered in said another short distance cell, and the home server is arranged to manage the query and communication to it from the other terminals in the network.

According to a second aspect of the present invention there is provided a wireless communication method using combined long and short distance wireless communication systems as specified above, comprising the steps of: detecting a dual distance terminal to determine whether it is located in a service area covered by a short distance access point; entering a short distance communication network through the short distance access point in a case where the dual distance terminal is located within the service area covered by the short distance access point AP, and informing a dual distance home server of a position of the dual distance terminal; searching for a base station for a long distance communication service if the dual distance terminal is not located in the area covered by any one of the short distance access points, entering a long distance communication network through a base station for a long distance communication service, and informing the dual distance home server of the position of the dual distance terminal; and switching seamlessly between a long distance communication network and a short distance communication network, based on its service level when the dual distance terminal enters the short distance network service area from the long distance network service area, or enters the long distance network service area from the short distance network service area; characterised in that the method further comprises storing data that may be missed during switching, and switching the stored data to a dual distance terminal via a data service function entity after said network switching is completed; and further characterised in that said step of switching further comprises: transmitting from the dual distance terminal a beacon signal to the short distance AP, the beacon signal then being transmitted to the dual distance communication server by the short distance AP when the dual distance terminal requests seamless switching from a short distance communication network to a long distance communication network based on its service level; transmitting from the dual distance terminal a beacon signal to the remote distance base station, the beacon signal then being transmitted to the dual distance communication server by the remote distance base station when the dual distance terminal requests seamless switching from a long distance communication network to a short distance communication network based on its service level; and determining at the dual distance network server a service queue position or priority in which the dual distance terminal is to be arranged in the destination network based on its service level, wherein when the dual distance terminal detects that a wireless local area network WLAN exists in the short distance network, the dual distance terminal then accesses the WLAN network, and the dual distance terminal continues the detection and enters into the long distance network in the case where the entrance into the WLAN network is unsuccessful, wherein when the dual distance terminal moves from one short distance cell to another short distance cell, the dual distance terminal identifies the short distance access point to which it enters, and sends the cell information to the dual distance network server to perform the switching between the short distance cells, and the dual distance terminal informs a home server among the dual distance network servers that it has already entered in said another short distance cell, and the home server manages the query and communication to it from the other terminals in the network.

The combination of long and short distance wireless communication according to the invention brings a lot of convenience, and changes the status of separation of the architectures of long distance and short distance radically. The present invention has the advantages as follows:

At any time, a real-time transmission may be achieved by the long distance wireless communication.

When a mobile terminal is allowed to enter the short distance wireless LAN, it can automatically switching to the short distance communication mechanism with priority, and the transmitting traffic stream of the subscriber would not be interrupted so that seamless switch can be achieved.

When the mobile terminal move out the short distance wireless LAN, it can automatically switch to the long distance communication network, and the transmitting traffic stream for the subscriber would not be interrupted so that seamless switch can be achieved.

When the other subscriber terminal in the system according to the invention is calling and querying any one of the terminal allowed to be accessed, the system according to the invention may guarantee the subscriber could be accessed either in the short distance communication LAN or in the short distance communication network.

Above and/or other objects and advantages of the present invention will become apparent and more readily appreciated from the following description of the embodiments, taken in conjunction with the accompany drawings of which:
Figure 1 is a schematic diagram showing the structure of according to an embodiment of the present invention.
Figure 2 is a flow chart showing the operation according to the embodiment of the invention.
Figure 3 is a schematic diagram showing the structure of the dual distance communication network server function module of the invention.
Figure 4 is a flow chart when the dual distance communication network server performs switching.
Figure 5 is a schematic diagram showing the structure of the dual distance terminal according to the invention.

The present invention constructs a wireless communication system as a structure of "ocean + island". According to the wireless communication system of the present invention, remote distance base stations cover all the effective areas; short distance access points (AP) cover areas such as offices, residents, and business areas which subscriber density is relatively high. A long and short distance communication server connects the short distance APs with the remote distance base stations. A plurality of dual distance terminals may freely move within the all areas covered by the short distance APs and the remote distance base stations.

The operation principle of the present invention:

When a dual distance terminal is powered on, first, it detects whether it is located in the service area covered by a certain short distance AP. If it is yes, then the dual distance terminal accesses the network through the short distance AP, and informs a dual distance home server of the position thereof. If the dual distance terminal is not within the area covered by any one of the short distance APs, then it searches for a base station for a long distance communication service, accesses network through the remote distance base station, and informs the dual distance home server of position thereof.

When a dual distance terminal located in the long distance communication network enters any one of the service areas covered by the short distance APs, the dual distance terminal will detect the short distance AP. If the short distance signal thereof is above a predetermined threshold, the dual distance terminal will automatically switch to short distance communication frequency band, and begin to access the network via the short distance AP. The data transmission carried out by the long distance communication network is then carried out by the short distance communication network to achieve seamless switch. Further, the terminal informs its home server of the area which it locates now. The server is in charge of the query and communication to the terminal from other terminals in the network.

When a dual distance terminal located in the short distance communication networks moves out of the service area covered by the short distance communication networks and enters the long distance network, the terminal detects the short distance AP signal. If the short distance signal thereof is below a predetermined threshold, the dual distance terminal automatically switches to the long distance network. The data transmission carried out by the short distance is then carried out by the long distance network to achieve seamless switch. Then, the terminal informs its home server that it has already located in the area covered by the long distance network. After that, the server is in charge of the query and communication to the terminal from other terminals in the network.

When a dual distance terminal located in the long distance networks requests to enter any one of the service areas of the short distance APs, if the AP in the area in which the terminal locate rejects the access of dual distance terminal due to security or other issues, the dual distance terminal then still keeps the long distance communication.

When a dual distance terminal moves from one short distance cell to another short distance cell, the dual distance terminal identify the area, into which the dual distance terminal will enter, covered by the short distance AP. Then the dual distance terminal transmits information of the corresponding cell to the dual distance communication network server so as to achieve the switching between the short distance cells. After that, the dual distance terminal informs the home server among the dual distance network communication servers that it has already been enter into the area covered by another short distance communication network. The home server is then in charge of the queries and communications to the dual distance terminal from the other terminals in the networks.

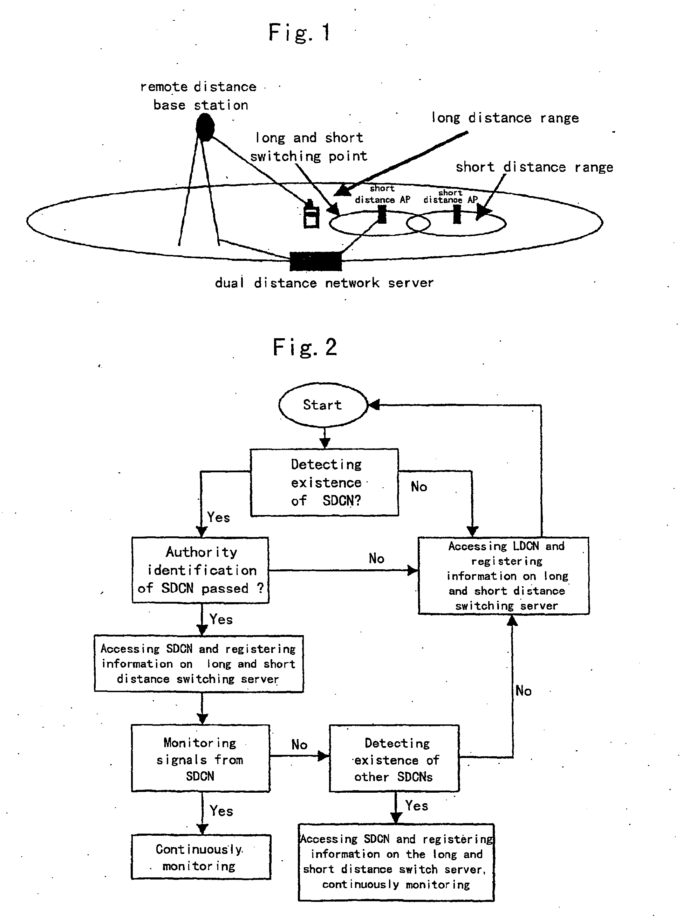

The invention will be described by using a combined dual distance wireless communication system which is formed by combining a long distance GSM/GPRS with a short distance WLAN by way of example. The network architecture of the wireless communication system according to the invention comprises GSM/GPRS base stations, a long distance access related network function entity, wireless LAN APs, a short distance access related network function entity, a dual distance communication network server for linking the long distance GSM/GPRS networks and the short distance wireless LANs, dual distance terminals compatible with long distance communication network and short distance communication network. Figure 1 shows the basic network structure of the invention. However, it should be noted that the present invention is not limited to the example shown as Figure 1, it may include a combined architecture formed by combining a long distance 3G communication with a short distance WLAN or a combined architecture of other long distance and short distance communication modes.

Now referring to Figures 1 and 2, the operation of a dual distance communication network formed by combining GSM/GPRS with WLAN according to an embodiment of the invention will be described in more detail.

### 1. In the dual distance network, after the dual terminal powered on.

For the system described in the invention, the dual terminal automatically searches for the network environment currently located after it is powered on by the subscriber. If the dual distance terminal detects that a wireless local area network WLAN network exists and does not require authority identification at present, the dual distance terminal then accesses the WLAN network directly. On the contrary, if the result of the detection indicates that current WLAN network requires authority identification, the dual distance terminal then performs access authority identification via WLAN. If the authority identification is successful, the dual distance terminal accesses current WLAN network. Otherwise, the dual distance terminal will continue the detection and enter into the long distance GPRS communication network.

After the dual distance terminal enters into the WLAN network, the dual distance terminal may perform data transmission by accessing the dual distance communication server via the short distance WLAN network.

### 2. Switching between networks

### 2.1 Switching from the short distance WLAN communication networks to the long distance GPRS communication networks

When the dual distance terminal moves out of the short distance WLAN network and enter into the GPRS network, the dual distance terminal may make judgment by using a predetermined switching condition. If a predetermined threshold for switching (which may refer to a non-usable threshold of a short distance communication network signal or may refer to a non-optimal threshold of a short distance communication network signal) is satisfied, the dual distance terminal terminates data transmitted through the WLAN radio frequency function entity (not shown) with the predetermined switching condition, and activates the long distance communication function entity and uses it to implement the possible sequent data transmission. If the service level of this dual distance terminal requires a seamless switching, then the dual distance terminal terminates the data being transmitted by the WLAN radio frequency function entity. At the same time, it sends beacon signal for switching between the short distance communication network and the long distance communication network to the short distance AP, from which the communication is switched, by the short distance communication function entity in the terminal. The beacon signal is transmitted to the dual distance communication network server by the short distance AP. After receiving the corresponding beacon signal, the dual distance network server informs the long distance communication function entity to be accessed by the dual distance terminal of the receipt, and determines the service queue position which the dual distance terminal is arranged in the long distance network function entity (provided in the dual distance network server, not shown) based on its service level.

Meanwhile, the dual distance communication network server stores the data packets which may be missed in the switching process to protect the data packets, the stored data packets are forwarded to the dual distance terminal after the switching is completed, thereby preventing data for the dual distance terminal from lost during the switching.

### 2.2 Switching from the long distance GPRS networks to the short distance WLAN networks

When the dual distance terminal moves out of the long distance GPRS network and enters into the short distance WLAN network, the dual distance terminal may make judgment by using switching condition. If the predetermined threshold for switching is satisfied, the dual distance terminal terminates the data transmitted through the long distance communication function entity with the predetermined switching condition, and activates the short distance communication function entity and uses it to implement the possible sequent data transmissions.

When terminating the data being transmitted by the long distance communication function entity, the dual distance terminal further sends one beacon signal of long and short distance switching to the GPRS service function entity, from which switch is performed, by the base station and the corresponding GPRS network function entity in the dual distance terminal. The beacon signal is transmitted to the dual distance network server by the GPRS function entity. After receiving the corresponding beacon signal, the dual distance network server informs the short distance communication function entity of the receipt, and determines the priority of the dual distance terminal in the short distance communication network function entity based on its service level.

Meanwhile, the dual distance communication network server stores the data packets which may be missed in the switching process to protect the data packets, the stored data packets are forwarded to the dual distance terminal after the switching is completed, thereby preventing data for the dual distance terminal from lost during the switching.

### 2.3 Switching from one short distance communication network to another short distance communication network

When the dual distance terminal moves from one short distance cell to another short distance cell, the dual distance terminal identifies the short distance AP to which it will enter, and sends the cell information to the dual distance network server, thereby implementing the switching between the short distance cells. The dual distance terminal then informs the home server among the dual distance network servers that it has already entered in the area covered by another short distance communication network, and the home server is in charge of the query and communication to it from the other terminals in the network.

### 2.4 Automatic switching

The subscriber may define the priority level of the switching in advance if necessary so that the dual distance terminal may perform automatic switching. The priority level is set according to charging fee, transmission rates, quality stability and the likes, for example. The dual distance terminal automatically identifies the switching according to the priority level. Further, when the subscriber is located within the areas covered by short distance AP, it may not select the use of short distance AP, but may directly select the use of long distance communication.

### 3. Scanning and detecting

With respect to the long and short distance communication network architecture, the most important problems are as follows:
(1) the dual distance terminal keeps the long distance and the short distance radio frequency entity in operating state all the time, and detects the possible long distance or short distance communication network environment in real-time, continuously feeds the detected results back to the dual distance terminal switching management mechanism, the detected results are reported to the dual distance network server through the existing network periodically or as desired;
(2) the dual distance terminal keeps the radio frequency function entity in the network in which it locates in operating state all the time, and activates the corresponding radio frequency function entities for the other networks periodically or non-periodically to detect the candidate networks;
(3) The dual distance terminal may keeps the radio frequency function entity in the network in which it locates in operating state all the time, and does not scan and detect the other networks. In this case, the dual distance terminal detects the other networks only when the existing network is not available;

The detection for candidate networks with non-periodically activating the corresponding radio frequency function entity may be carried out by means of some specific algorithms, such as a viable-step detection method which the time interval of finally finding the occurrence of other networks is used as a function.

### 4. Switching conditions

The switching conditions can be selected according to different situations for the network user, hereafter is the two examples of the switching conditions. It should be noted that the present invention did not limit the two switching conditions as described below, other conditions can also be used in the present invention.
(1) The network switching is performed based on priority level. That is, as long as the dual distance terminal finds the occurrence of the network with higher priority level, then it switches to the network with higher priority level, no matter whether the network which is used currently is available or not. The subscribers can define the priority levels of various wireless networks as desired, for example, transmission rate, usage fee and the likes.
(2) The dual distance terminal switches to other networks only when the currently used wireless network signals may not be received. This switching condition means that the switch is performed only when the wireless network in which the dual distance terminal currently locates is not available. In contrary, the switch is not performed if the network in which the dual distance locates is available, even though there is a network with a higher priority level.

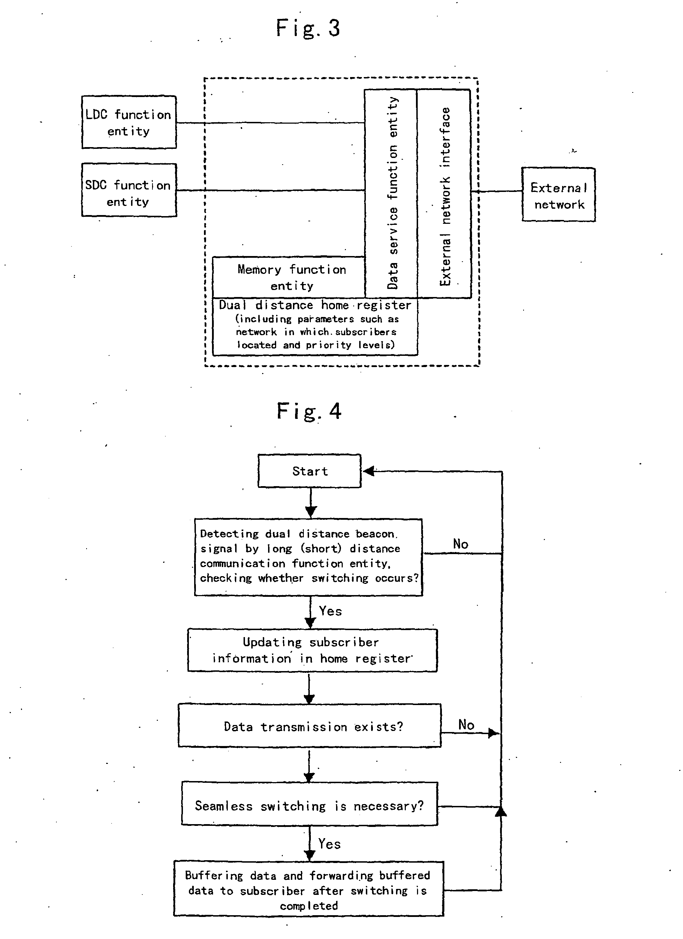

Figure 3 is a schematic diagram showing the dual distance network server. The dual distance network server comprises a data service function entity, a memory function entity, a dual distance home server, and an external network interface. The data service function entity detects whether a long or short distance data transmission occurs. The data transmission includes data transmission between the dual distance terminal located in a long distance communication network and the dual distance terminal located in a short distance communication network, and the data transmission between the dual distance terminal located in a long or a short distance communication network and external networks. The data transmission between the dual distance terminals located in a long (or short) distance communication network can be carried out by the long (or short) distance network function entity (provided in the dual distance network server, not shown). When a long and a short distance data transmission occurs, a connection service is provided to the data transmission.

A beacon signal of the dual distance terminal forwarded by the long (short) distance network function entity is detected to determine whether the dual distance terminal performs a switching between the long and short distance communication networks. If so, then a new terminal information (for example, a network name to which the terminal is switched) is informed to a dual distance home register.

The memory function entity stores the data which is possibly missed at the time of switching. Further, the memory function entity forwards the stored data to the terminal via the data service function entity after the switching is completed so that the terminal can achieve a seamless switching between the long distance communication network and the short distance communication network.

The dual distance home server records the dual distance characteristic parameters of the managed dual distance terminals, such as the situations of the located network, priority level parameters of the terminals and the likes. The terminal switching information can be obtained via the data service function entity when a switching occurs between the long distance communication network and the short distance communication network. The terminal data is updated. The terminal-related dual distance information is informed to the data service function entity when a query regarding the terminal occurs.

The external network interface connects the long distance communication network and short distance communication network to the external network. The external network interface comprises a wireless interface, an interface for wire network, and an interface for other wireless networks.

Figure 4 is a flow chart showing the operation process when the dual network server performs switching. When the dual distance terminal moves from one network to another network, the dual distance network server cooperates with the dual distance terminal for performing switch. The process of the switching is as follows:
first step: detecting the dual distance beacon signal of the dual distance terminal by the long (or short) distance network function entity, checking whether a switching occurs, if it is not, then the detection is repeated; if it is yes, the flow turns to next step;
second step: updating the subscriber information registered in the dual distance home register;
third step: determining whether or not data transmission occurs, if it is not, the flow returns to the first step;
fourth step: determining whether or not there exist a need for seamless switching, if it is not, the flow returns to the fist step;
fifth step: buffering the transmitted data, and forwarding the buffered data to the dual distance terminal after the switch is completed.

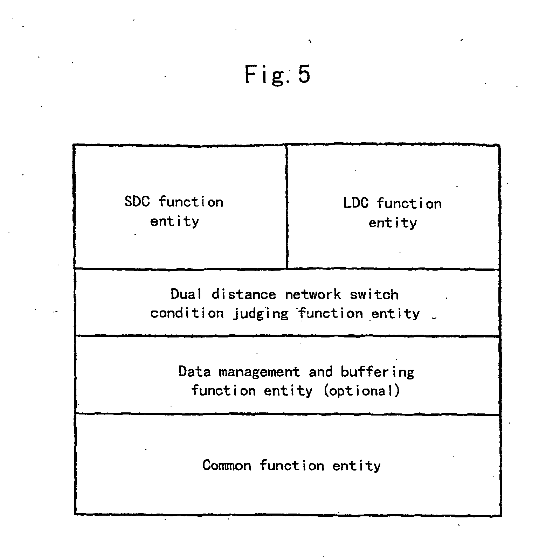

Figure 5 is a schematic diagram showing the functional structure of the dual distance terminals according to an embodiment of the invention. The dual distance terminal according to the present invention can operate within the long distance communication network and the short distance communication network during it moves in both networks. Therefore, it is necessary for the dual distance terminals of the invention to have a structure adaptive to the features of both networks. The dual distance terminal comprises at least a short distance communication function entity, a long distance communication function entity, a dual network switch condition judging function entity, and a common function entity.

The short distance communication function entity includes a short distance radio frequency function module and may achieve the functions of the physical layer and a part of a MAC layer or link layer. The short distance communication function entity operates in the short distance communication network and obtains data information.

The long distance communication function entity includes a long distance radio frequency function module and may achieve the functions the physical layer and a part of link layer.

The network switch condition judging function entity performs network switching for the dual distance terminal based on the corresponding dual distance switch condition judging and instructs the short distance communication function entity or the long distance communication function entity to send a beacon signal to the dual distance network server;

The common function entity includes basic functions such as display, input and output contained in conventional terminals;

The dual distance terminal controls the operating modes of the radio frequency function module in the long (short) communication function entity by using the dual network switch condition judging function entity. The operating modes of the radio frequency function modules comprise (1) the long radio frequency function module and short radio frequency function module operate simultaneously; (2) performs the viable-step operating mode according to circumstances; and (3) only when one network does not exist, the radio frequency function entity corresponding to the other network is activated so as to search for the other network.

In the present invention, alternatively, the dual distance terminal may also comprise a data management and buffering function entity which manages and buffers the corresponding data during the switching.

Unlike the conventional terminals, the dual distance terminal of the invention has both the long distance and the short distance communication function entity. Therefore, it can detect or automatically search the possible short distance communication networks such as WLAN and the long distance communication networks such as GSM/GPRS or 3G simultaneously. Further, it can also perform the short distance or long distance data transmission services (including voice which is a specific data service) by means of the short distance and the long distance function entities. Another difference from the conventional terminals is in that the dual distance terminal of the invention also comprises a network switch condition judging function entity. The network switch condition judging function entity performs network switching for the dual distance terminal based on the corresponding dual distance switch condition judging and instructs the short distance communication function entity or the long distance communication function entity to send a beacon signal to the dual distance network server. Further, it may optionally comprise a data management and buffering function entity which manages and buffers the corresponding data during the switching. Thus, the data transmission requested by the common function entity does not be interrupted due to the switching.

Although the present invention has been described by way of exemplary embodiments, it should be understood that many changes and substitutions may further be made by those skilled in the art without departing from the scope of the present invention which is defined by the appended claims.

## Claims

1. A combined long and short distance wireless communication system comprising:
a dual distance terminal for providing subscribers with long and short distance communication services;
at least one remote distance base station for providing remote distance wireless access for said dual distance terminal;
at least one short distance access point AP for providing short distance wireless access for said dual distance terminal; and
a dual distance network server for connecting said at least one remote distance base station and said at least one short distance AP to execute network switching for said dual distance terminal and enabling said dual distance terminal to access the network to which it is switched;
**characterised in that** the dual distance network server is arranged to store data that may be missed during switching and to send the stored data to said dual distance terminal after said terminal switching is completed;
wherein the dual distance terminal is arranged such that when the dual distance terminal requests seamless switching from a short distance communication network to a long distance communication network based on its service level, the dual distance terminal transmits a beacon signal to the short distance AP, the beacon signal then being transmitted to the dual distance communication server by the short distance AP;
wherein the dual distance terminal is arranged such that when the dual distance terminal requests seamless switching from a long distance communication network to a short distance communication network based on its service level, the dual distance terminal transmits a beacon signal to the remote distance base station, the beacon signal then being transmitted to the dual distance communication server by the remote distance base station; and
wherein the dual distance network server is arranged to determine a service queue position or priority in which the dual distance terminal is to be arranged in the destination network based on its service level,
wherein the dual distance terminal is arranged such that when the dual distance terminal detects that a wireless local area network WLAN exists in the short distance network, the dual distance terminal then accesses the WLAN network, and the dual distance terminal continues the detection and enters into the long distance network in the case where the entrance into the WLAN network is unsuccessful,
wherein the dual distance terminal is arranged such that when the dual distance terminal moves from one short distance cell to another short distance cell, the dual distance terminal identifies the short distance access point to which it enters, and sends the cell information to the dual distance network server to perform the switching between the short distance cells, and the dual distance terminal informs a home server among the dual distance network servers that it has already entered in said another short distance cell, and the home server is arranged to manage the query and communication to it from the other terminals in the network.

2. A wireless communication method using combined long and short distance wireless communication systems as claimed in claim 1, comprising the steps of:
detecting a dual distance terminal to determine whether it is located in a service area covered by a short distance access point;
entering a short distance communication network through the short distance access point in a case where the dual distance terminal is located within the service area covered by the short distance access point, and informing a dual distance home server of a position of the dual distance terminal;
searching for a base station for a long distance communication service if the dual distance terminal is not located in the area covered by any one of the short distance access points, entering a long distance communication network through a base station for a long distance communication service, and informing the dual distance home server of the position of the dual distance terminal; and
switching seamlessly between a long distance communication network and a short distance communication network, based on its service level when the dual distance terminal enters the short distance network service area from the long distance network service area, or enters the long distance network service area from the short distance network service area;
**characterised in that** the method further comprises storing data that may be missed during switching, and switching the stored data to a dual distance terminal via a data service function entity after said network switching is completed; and
wherein said step of switching further comprises:
transmitting from the dual distance terminal a beacon signal to the short distance AP, the beacon signal then being transmitted to the dual distance communication server by the short distance AP when the dual distance terminal requests seamless switching from a short distance communication network to a long distance communication network based on its service level;
transmitting from the dual distance terminal a beacon signal to the remote distance base station, the beacon signal then being transmitted to the dual distance communication server by the remote distance base station when the dual distance terminal requests seamless switching from a long distance communication network to a short distance communication network based on its service level; and
determining at the dual distance network server a service queue position or priority in which the dual distance terminal is to be arranged in the destination network based on its service level,
wherein when the dual distance terminal detects that a wireless local area network WLAN exists in the short distance network, the dual distance terminal then accesses the WLAN network, and the dual distance terminal continues the detection and enters into the long distance network in the case where the entrance into the WLAN network is unsuccessful,
wherein when the dual distance terminal moves from one short distance cell to another short distance cell, the dual distance terminal identifies the short distance access point to which it enters, and sends the cell information to the dual distance network server to perform the switching between the short distance cells, and the dual distance terminal informs a home server among the dual distance network servers that it has already entered in said another short distance cell, and the home server manages the query and communication to it from the other terminals in the network.

3. The wireless communication method according to claim 2, wherein the dual distance terminal performs data transmission by accessing the dual distance server via the short distance WLAN network in the case where the dual distance terminal enters into the short distance WLAN network.

4. The wireless communication method according to claim 2, wherein the dual distance terminal terminates data transmission through a short distance radio frequency function entity and activates a long distance communication function entity to perform subsequent data transmission if a predetermined threshold for the switching is satisfied, and the dual distance terminal moves out of the short distance WLAN network and enters into the long distance network so that network switch is completed.

5. The wireless communication method according to claim 2, wherein the dual distance terminal terminates data transmission through a long distance radio frequency function entity and activates a short distance communication function entity to perform subsequent data transmission if a predetermined threshold for the switching is satisfied, and the dual distance terminal moves out of the long distance WLAN network and enters into the short distance network so that network switch is completed.

6. The wireless communication method according to claim 4 or claim 5, wherein said predetermined conditions for the switching refer to switching the dual distance terminal to a network with a higher priority level when the network with higher priority level exists.

7. The wireless communication method according to claim 4 or claim 5, wherein said predetermined conditions for the switching refer to switching the dual distance terminal to other networks only when the currently used wireless network signals can not be received.

8. The wireless communication method according to claim 2, wherein the process of the dual distance server cooperating with the dual distance terminal to perform the switching comprises:
detecting the dual distance beacon signal of the dual distance terminal by the long or short distance network function entity to determine whether or not switching occurs;
updating the subscriber information registered in the dual distance home register;
determining whether or not data transmission occurs, and if not returning to the step of detecting the dual distance beacon signal;
determining whether or not there exists a need for seamless switching, and if not returning to the step of detecting the dual distance beacon signal; and
buffering the transmitted data, and forwarding the buffered data to the dual distance terminal after the switch is completed.

9. The wireless communication method according to claim 5, wherein when the dual distance terminal located in the long distance network requests to enter any one of the service areas covered by the short distance access points, and the dual distance terminal can not access the short distance network, then the dual distance terminal continues to operate the long distance communication.

## Patentansprüche

1. Kombiniertes kurz- und langreichweitiges drahtloses Kommunikationssystem, umfassend:
ein doppelreichweitiges Anschlussteil zum Bereitstellen von lang- und kurzreichweitigen Kommunikationsdiensten für Teilnehmer;
mindestens eine fernreichweitige Basisstation zum Bereitstellen von fernreichweitigem drahtlosem Zugriff für das doppelreichweitige Anschlussteil;
mindestens einen kurzreichweitigen Zugangspunkt AP zum Bereitstellen von kurzreichweitigem drahtlosem Zugriff für das doppelreichweitige Anschlussteil; und
ein doppelreichweitiger Netzwerkserver zum Verbinden der mindestens einen fernreichweitigen Basisstation und des mindestens einen kurzreichweitigen AP zum Ausführen von Netzwerkschalten für das doppelreichweitige Anschlussteil und um es dem doppelreichweitigen Anschlussteil zu ermöglichen, auf das Netzwerk zuzugreifen, in welches es geschaltet ist;
**dadurch gekennzeichnet, dass** der doppelreichweitige Netzwerkserver angeordnet ist, Daten zu speichern, die während dem Schalten verloren gehen könnten, und die gespeicherten Daten zu dem doppelreichweitigen Anschlussteil zu senden, nachdem das Anschlussteil-Schalten fertig gestellt ist;
wobei das doppelreichweitige Anschlussteil so angeordnet ist, dass, wenn das doppelreichweitige Anschlussteil nahtloses Schalten von einem kurzreichweitigen Kommunikationsnetzwerk zu einem langreichweitigen Kommunikationsnetzwerk basierend auf seinem Dienstlevel anfordert, das doppelreichweitige Anschlussteil ein Bakensignal an den kurzreichweitigen AP überträgt, wobei das Bakensignal dann an den doppelreichweitigen Kommunikationsserver anhand des kurzreichweitigen AP übertragen wird;
wobei das doppelreichweitige Anschlussteil derart angeordnet ist, dass, wenn das doppelreichweitige Anschlussteil nahtloses Schalten von einem langreichweitigen Kommunikationsnetzwerk zu einem kurzreichweitigen Kommunikationsnetzwerk basierend auf seinem Dienstlevel anfordert, das doppelreichweitige Anschlussteil ein Bakensignal an die fernreichweitige Basisstation überträgt, wobei das Bakensignal dann anhand der fernreichweitigen Basisstation an den doppelreichweitigen Kommunikationsserver übertragen wird; und
wobei der doppelreichweitige Netzwerkserver angeordnet ist, eine Position der Dienstreihenfolge oder Priorität zu bestimmen, mit der das doppelreichweitige Anschlussteil basierend auf seinem Dienstlevel in dem Zielnetzwerk angeordnet werden soll,
wobei das doppelreichweitige Anschlussteil derart angeordnet ist, dass, wenn das doppelreichweitige Anschlussteil detektiert, dass ein drahtloses Lokalnetzwerk WLAN in dem kurzreichweitigen Netzwerk existiert, das doppelreichweitige Anschlussteil dann auf das WLAN-Netzwerk zugreift und das doppelreichweitige Anschlussteil mit dem Detektieren fortfährt und dem langreichweitigen Netzwerk in dem Fall beitritt, in dem der Beitritt in das WLAN-Netzwerk fehlschlägt,
wobei das doppelreichweitige Anschlussteil derart angeordnet ist, dass, wenn sich das doppelreichweitige Anschlussteil von einer kurzreichweitigen Zelle zu einer weiteren kurzreichweitigen Zelle bewegt, das doppelreichweitige Anschlussteil den kurzreichweitigen Zugangspunkt identifiziert, dem es beitritt, und die Zelleninformation an den doppelreichweitigen Netzwerkserver sendet, um das Schalten zwischen den kurzreichweitigen Zellen durchzuführen, und wobei das doppelreichweitige Anschlussteil einen Heimserver von den doppelreichweitigen Netzwerkservern informiert, dass es bereits der weiteren kurzreichweitigen Zelle beigetreten ist, und wobei der Heimserver angeordnet ist, die Anfrage und Kommunikation mit ihm von den anderen Anschlussteilen in dem Netzwerk zu verwalten.

2. Drahtloses Kommunikationsverfahren unter Verwendung von lang- und kurzreichweitigen drahtlosen Kommunikationssystemen, wie sie in Anspruch 1 beansprucht sind, die Schritte umfassend:
Detektieren eines doppelreichweitigen Anschlussteils, um zu bestimmen, ob es in einem Dienstbereich befindlich ist, welcher von einem kurzreichweitigen Zugangspunkt abgedeckt wird;
Beitreten zu einem kurzreichweitigen Kommunikationsnetzwerk anhand des kurzreichweitigen Zugangspunkts, in dem Fall, in dem das doppelreichweitige Anschlussteil innerhalb des Dienstbereichs befindlich ist, der von dem kurzreichweitigen Zugangspunkt abgedeckt wird, und Informieren eines doppelreichweitigen Heimservers über eine Position des doppelreichweitigen Zugangsteils;
Suchen nach einer Basisstation für einen langreichweitigen Kommunikationsdienst, wenn das doppelreichweitige Anschlussteil nicht in dem Bereich, der einem beliebigen der kurzreichweitigen Zugangspunkte abgedeckt wird, befindlich ist, Beitreten zu einem langreichweitigen Kommunikationsnetzwerk anhand einer Basisstation für einen langreichweitigen Kommunikationsdienst und Informieren des doppelreichweitigen Heimservers über die Position des doppelreichweitigen Anschlussteils; und
nahtloses Schalten zwischen einem langreichweitigen Kommunikationsnetzwerk und einem kurzreichweitigen Kommunikationsnetzwerk basierend auf seinem Dienstlevel, wenn das doppelreichweitige Annschlussteil dem kurzreichweitigen Netzwerkdienstgebiet aus dem langreichweitigen Netzwerkdienstgebiet beitritt oder dem langreichweitigen Netzwerkdienstgebiet aus dem kurzreichweitigen Netzwerkdienstgebiet beitritt;
**dadurch gekennzeichnet, dass** das Verfahren weiterhin umfasst Speichern von Daten, die während dem Schalten verlorengehen könnten, und Schalten der gespeicherten Daten zu einem doppelreichweitigen Anschlussteil mittels einer Datendienst-Funktionseinheit, nachdem das Netzwerkschalten fertig gestellt ist; und
wobei der Schritt des Schaltens weiterhin umfasst:
Übertragen eines Bakensignals von dem doppelreichweitigen Anschlussteil zu dem kurzreichweitigen AP, wobei das Bakensignal dann an den doppelreichweitigen Kommunikationsserver anhand des kurzreichweitigen AP übertragen wird, wenn das doppelreichweitige Anschlussteil nahtloses Schalten von einem kurzreichweitigen Kommunikationsnetzwerk zu einem langreichweitigen Kommunikationsnetzwerk basierend auf seinem Dienstlevel anfordert;
Übertragen eines Bakensignals von dem doppelreichweitigen Anschlussteil zu der fernreichweitigen Basisstation, wobei das Bakensignal dann anhand der fernreichweitigen Basisstation zu dem doppelreichweitigen Kommunikationsserver übertragen wird, wenn das doppelreichweitige Anschlussteil nahtloses Schalten von einem langreichweitigen Kommunikationsnetzwerk zu einem kurzreichweitigen Kommunikationsnetzwerk basierend auf seinem Dienstlevel anfordert; und
Bestimmen an dem doppelreichweitigen Netzwerkserver einer Position der Dienstreihenfolge oder eine Priorität, mit der das doppelreichweitige Anschlussteil in dem Zielnetzwerk basierend auf seinem Dienstlevel angeordnet werden soll,
wobei, wenn das doppelreichweitige Anschlussteil detektiert, dass ein drahtloses Lokalnetzwerk WLAN in dem kurzreichweitigen Netzwerk existiert, das doppelreichweitige Anschlussteil dem WLAN-Netzwerk dann beitritt, und das doppelreichweitige Anschlussteil das Detektieren fortsetzt und dem langreichweitigen Netzwerk in dem Fall beitritt, in dem der Beitritt zu dem WLAN-Netzwerk fehlschlägt,
wobei, wenn sich das doppelreichweitige Anschlussteil von einer kurzreichweitigen Zelle zu einer weiteren kurzreichweitigen Zelle bewegt, das doppelreichweitige Anschlussteil den kurzreichweitigen Zugangspunkt, dem es beitritt, identifiziert, und die Zelleninformation zu dem doppelreichweitigen Netzwerkserver sendet, um das Schalten zwischen den kurzreichweitigen Zellen durchzuführen, und wobei das doppelreichweitige Anschlussteil einen Heimserver von den doppelreichweitigen Netzwerkservern informiert, dass es bereits in die weitere kurzreichweitige Zelle beigetreten ist, und wobei der Heimserver die Anfrage und Kommunikation mit ihm von den anderen Anschlussteilen in dem Netzwerk verwaltet.

3. Drahtloses Kommunikationsverfahren nach Anspruch 2, wobei das doppelreichweitige Anschlussteil Datenübertragung mittels Zugriff auf den doppelreichweitigen Server über das kurzreichweitige WLAN-Netzwerk in dem Fall durchführt, in dem das doppelreichweitige Anschlussteil dem kurzreichweitigen WLAN-Netzwerk beitritt.

4. Drahtloses Kommunikationsverfahren nach Anspruch 2, wobei das doppelreichweitige Anschlussteil Datenübertragung durch eine kurzreichweitige Hochfrequenz-Funktionseinheit beendet und eine langreichweitige Kommunikations-Funktionseinheit aktiviert, um darauffolgend Datenübertragung durchzuführen, wenn ein vorbestimmter Schwellenwert für das Schalten erfüllt ist und wenn sich das doppelreichweitige Anschlussteil aus dem kurzreichweitigen WLAN-Netzwerk hinausbewegt und dem langreichweitigen Netzwerk beitritt, so dass das Netzwerkschalten fertig gestellt ist.

5. Drahtloses Kommunikationsverfahren nach Anspruch 2, wobei das doppelreichweitige Anschlussteil Datenübertragung mittels einer langreichweitigen Hochfrequenz-Funktionseinheit beendet und eine kurzreichweitige Kommunikations-Funktionseinheit aktiviert, um darauffolgend Datenübertragung durchzuführen, wenn ein vorbestimmter Schwellenwert für das Schalten erfüllt ist und wenn sich das doppelreichweitige Anschlussteil aus dem langreichweitigen WLAN-Netzwerk hinausbewegt und dem kurzreichweitigen Netzwerk beitritt, so dass das Netzwerkschalten fertig gestellt ist.

6. Drahtloses Kommunikationsverfahren nach Anspruch 4 oder Anspruch 5, wobei die vorbestimmten Bedingungen zum Schalten Bezug nehmen auf Schalten des doppelreichweitigen Anschlussteils zu einem Netzwerk mit einem höheren Prioritätslevel, wenn das Netzwerk mit höherem Prioritätslevel existiert.

7. Drahtloses Kommunikationsverfahren nach Anspruch 4 oder Anspruch 5, wobei die vorbestimmten Bedingungen zum Schalten Bezug nehmen auf Schalten des doppelreichweitigen Anschlussteils zu anderen Netzwerken nur dann, wenn die gegenwärtig benutzten drahtlosen Netzwerksignale nicht empfangen werden können.

8. Drahtloses Kommunikationsverfahren nach Anspruch 2, wobei der Prozess, nach dem der doppelreichweitige Server mit dem doppelreichweitigen Anschlussteil zusammenwirkt, um das Schalten durchzuführen, umfasst:
Detektieren des doppelreichweitigen Bakensignals des doppelreichweitigen Anschlussteils mittels der lang- oder kurzreichweitigen Netzwerk-Funktionseinheit, um zu Bestimmen, ob Schalten stattfindet oder nicht;
Erneuern der Teilnehmerinformation, die in dem doppelreichweitigen Heimregister registriert ist;
Bestimmen, ob Datenübertragung stattfindet oder nicht, und wenn nicht, Zurückgehen zu dem Schritt des Detektierens des doppelreichweitigen Bakensignals;
Bestimmen, ob ein Bedarf für nahtloses Schalten existiert oder nicht, und wenn nicht, Zurückgehen zu dem Schritt des Detektierens des doppelreichweitigen Bakensignals; und
Puffern der übertragenen Daten und Weiterleiten der gepufferten Daten an das doppelreichweitige Anschlussteil, nachdem das Schalten fertig gestellt ist.

9. Drahtloses Kommunikationsverfahren nach Anspruch 5, wobei, wenn das in dem langreichweitigen Netzwerk befindliche doppelreichweitige Anschlussteil anfordert, einem der Dienstgebiete, die von den kurzreichweitigen Zugangspunkten abgedeckt werden, beizutreten, und wenn das doppelreichweitige Anschlussteil auf das kurzreichweitige Netzwerk nicht zugreifen kann, das doppelreichweitige Anschlussteil dann fortfährt, die langreichweitige Kommunikation zu betreiben.

## Revendications

1. Système de communication sans fil combinées à longue et courte distances combinées comprenant :
un terminal à double distance pour fournir aux abonnés des services de communication à longue et courte distances ;
au moins une station de base à distance destinée à fournir un accès sans fil à distance pour ledit terminal à double distance;
au moins un point d'accès, AP, à courte distance pour fournir un accès sans fil à courte distance pour ledit terminal à double distance; et
un serveur de réseau à double distance pour connecter ladite au moins une station de base à distance et ledit au moins un point AP à courte distance en vue d'exécuter une commutation de réseau pour ledit terminal à double distance , et de permettre audit terminal à double distance d'accéder au réseau vers lequel il est commuté ;
**caractérisé en ce que** le serveur de réseau à double distance est agencé de manière à stocker des données qui peuvent être manquées lors de la commutation, et à envoyer les données stockées audit terminal à double distance lorsque ladite commutation de terminal est terminée ;
dans lequel le terminal à double distance est agencé de sorte que, lorsque le terminal à double distance demande une commutation transparente du réseau de communication à courte distance vers un réseau de communication à longue distance sur la base de son niveau de service, le terminal à double distance transmet un signal de balise au point AP à courte distance, le signal de balise étant ensuite transmis au serveur de communication à double distance par le point AP à courte distance ;
dans lequel le terminal à double distance est agencé de sorte que, lorsque le terminal à double distance demande une commutation transparente du réseau de communication à longue distance vers un réseau de communication à courte distance sur la base de son niveau de service, le terminal à double distance transmet un signal de balise à la station de base à distance, le signal de balise étant ensuite transmis au serveur de communication à double distance par la station de base à distance ; et
dans lequel le serveur de réseau à double distance est agencé de manière à déterminer une priorité ou une position de file d'attente de service selon laquelle le terminal à double distance doit être ordonnancé dans le réseau de destination sur la base de son niveau de service ;
dans lequel, le terminal à double distance est agencé de sorte que, lorsque le terminal à double distance détecte qu'un réseau local sans fil WLAN existe dans le réseau à courte distance, le terminal à double distance accède ensuite au réseau WLAN, et le terminal à double distance continue la détection et entre dans le réseau à longue distance dans le cas où l'entrée dans le réseau WLAN est infructueuse ;
dans lequel, le terminal à double distance est agencé de sorte que, lorsque le terminal à double distance se déplace d'une cellule à courte distance vers une autre cellule à courte distance, le terminal à double distance identifie le point d'accès à courte distance dans lequel il entre, et envoie les informations de cellule au serveur de réseau à double distance en vue de mettre en oeuvre la commutation entre les cellules à courte distance, et le terminal à double distance indique à un serveur domestique, parmi les serveurs de réseau à double distance , qu'il est déjà entré dans ladite une autre cellule à courte distance, et le serveur domestique est agencé de manière à gérer la demande et la communication qui lui sont destinées à partir des autres terminaux dans le réseau.

2. Procédé de communication sans fil utilisant des systèmes de communication sans fil à longue et courte distances combinées selon la revendication 1, comprenant les étapes ci-dessous consistant à :
détecter un terminal à double distance en vue de déterminer s'il est situé dans une zone de service couverte par un point d'accès à courte distance ;
entrer dans un réseau de communication à courte distance par le biais du point d'accès à courte distance dans un cas où le terminal à double distance est situé dans la zone de service couverte par le point d'accès à courte distance, et indiquer à un serveur domestique à double distance une position du terminal à double distance;
rechercher une station de base pour un service de communication à longue distance si le terminal à double distance n'est pas situé dans la zone couverte par l'un quelconque des points d'accès à courte distance, entrer dans un réseau de communication à longue distance par le biais d'une station de base pour un service de communication à longue distance, et indiquer au serveur domestique à double distance la position du terminal à double distance; et
mettre en oeuvre une commutation transparente entre un réseau de communication à longue distance et un réseau de communication à courte distance, sur la base de son niveau de service, lorsque le terminal à double distance entre dans la zone de service de réseau à courte distance à partir de la zone de service de réseau à longue distance, ou entre dans la zone de service de réseau à longue distance à partir de la zone de service de réseau à courte distance ;
**caractérisé en ce que** le procédé comprend en outre l'étape consistant à stocker des données qui peuvent être manquées lors de la commutation, et à commuter les données stockées vers un terminal à double distance par l'intermédiaire d'une entité de fonction de service de données lorsque ladite commutation de réseau est terminée ; et
dans lequel ladite étape de commutation comprend en outre les étapes ci-dessous consistant à :
transmettre, à partir du terminal à double distance , un signal de balise au point AP à courte distance, le signal de balise étant ensuite transmis au serveur de communication à double distance par le point AP à courte distance lorsque le terminal à double distance demande une commutation transparente, d'un réseau de communication à courte distance à un réseau de communication à longue distance, sur la base de son niveau de service ;
transmettre, à partir du terminal à double distance , un signal de balise à la station de base à distance, le signal de balise étant ensuite transmis au serveur de communication à double distance par la station de base à distance lorsque le terminal à double distance demande une commutation transparente, d'un réseau de communication à longue distance vers un réseau de communication à courte distance, sur la base de son niveau de service ; et
déterminer, au niveau du serveur de réseau à double distance , une priorité ou une position de file d'attente de service selon laquelle le terminal à double distance doit être ordonnancé dans le réseau de destination sur la base de son niveau de service ;
dans lequel, lorsque le terminal à double distance détecte qu'un réseau local sans fil WLAN existe dans le réseau à courte distance, le terminal à double distance accède ensuite au réseau WLAN, et le terminal à double distance continue la détection et entre dans le réseau à longue distance dans le cas où l'entrée dans le réseau WLAN est infructueuse ;
dans lequel, lorsque le terminal à double distance se déplace d'une cellule à courte distance vers une autre cellule à courte distance, le terminal à double distance identifie le point d'accès à courte distance dans lequel il entre, et envoie les informations de cellule au serveur de réseau à double distance en vue de mettre en oeuvre la commutation entre les cellules à courte distance, et le terminal à double distance indique à un serveur domestique, parmi les serveurs de réseau à double distance , qu'il est déjà entré dans ladite une autre cellule à courte distance, et le serveur domestique gère la demande et la communication qui lui sont destinées à partir des autres terminaux dans le réseau.

3. Procédé de communication sans fil selon la revendication 2, dans lequel le terminal à double distance met en oeuvre une transmission de données en accédant au serveur à double distance par le biais du réseau WLAN à courte distance dans le cas où le terminal à double distance entre dans le réseau WLAN à courte distance.

4. Procédé de communication sans fil selon la revendication 2, dans lequel le terminal à double distance met fin à une transmission de données à travers une entité de fonction de radiofréquence à courte distance, et active une entité de fonction de communication à longue distance en vue de mettre en oeuvre une transmission de données subséquente si un seuil prédéterminé pour la commutation est satisfait, et le terminal à double distance quitte le réseau WLAN à courte distance et entre dans le réseau à longue distance, de sorte que la commutation de réseau est terminée.

5. Procédé de communication sans fil selon la revendication 2, dans lequel le terminal à double distance met fin à une transmission de données à travers une entité de fonction de radiofréquence à longue distance, et active une entité de fonction de communication à courte distance en vue de mettre en oeuvre une transmission de données subséquente si un seuil prédéterminé pour la commutation est satisfait, et le terminal à double distance quitte le réseau WLAN à longue distance et entre dans le réseau à courte distance, de sorte que la commutation de réseau est terminée.

6. Procédé de communication sans fil selon la revendication 4 ou 5, dans lequel lesdits états prédéterminés pour la commutation renvoient à une commutation du terminal à double distance vers un réseau présentant un niveau de priorité plus élevé, lorsque le réseau présentant un niveau de priorité plus élevé existe.

7. Procédé de communication sans fil selon la revendication 4 ou 5, dans lequel lesdits états prédéterminés pour la commutation renvoient à une commutation du terminal à double distance vers d'autres réseaux, uniquement lorsque les signaux du réseau sans fil actuellement utilisé ne peuvent pas être reçus.

8. Procédé de communication sans fil selon la revendication 2, dans lequel le processus de coopération entre le serveur à double distance et le terminal à double distance destiné à mettre en oeuvre la commutation comprend les étapes ci-dessous consistant à :
détecter le signal de balise à double distance du terminal à double distance, par le biais de l'entité de fonction de réseau à courte ou longue distance, en vue de déterminer si une commutation se produit ou non ;
mettre à jour les informations d'abonné enregistrées dans l'enregistreur nominal à double distance;
déterminer si une transmission de données se produit ou non, et, si tel n'est pas le cas, retourner à l'étape de détection du signal de balise à double distance;
déterminer s'il existe ou non un besoin de commutation transparente, et si tel n'est pas le cas, retourner à l'étape de détection du signal de balise à double distance; et
mettre en mémoire tampon les données transmises, et acheminer les données mises en mémoire tampon vers le terminal à double distance à la suite de la commutation.

9. Procédé de communication sans fil selon la revendication 5, dans lequel, lorsque le terminal à double distance situé dans le réseau à longue distance demande à entrer dans l'une quelconque des zones de service couvertes par les points d'accès à courte distance, et lorsque le terminal à double distance ne peut pas accéder au réseau à courte distance, alors le terminal à double distance continue à exploiter la communication à longue distance.
